(19) Europäisches Patentamt / European Patent Office / Office européen des brevets

(11) **EP 1 788 721 A2**

(12) **EUROPEAN PATENT APPLICATION**

(43) Date of publication:
23.05.2007 Bulletin 2007/21

(51) Int Cl.:
*H04B 7/04* (2006.01)

(21) Application number: 06124489.3

(22) Date of filing: 21.11.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(30) Priority: 22.11.2005 US 739081 P
19.06.2006 KR 20060054832

(71) Applicant: Samsung Electronics Co., Ltd.
Suwon-si, Gyeonggi-Do (KR)

(72) Inventors:
• Hwang, In-Soo
Yeongtong-gu,
Suwon-si,
Gyeonggi-do (KR)

• You, Cheol-Woo
Yeongtong-gu,
Suwon-si,
Gyeonggi-do (KR)
• Nam, Seung-Hoon
Yeongtong-gu,
Suwon-si,
Gyeonggi-do (KR)
• Kim, Yung-Soo
Yeongtong-gu,
Suwon-si,
Gyeonggi-do (KR)
• Vahid, Tarokh
Cambridge,
Massachusetts 02139 (US)

(74) Representative: Grünecker, Kinkeldey, Stockmair & Schwanhäusser Anwaltssozietät
Maximilianstrasse 58
80538 München (DE)

(54) **Apparatus and method for determining transmit/receive antenna in communication system using multiple antennas**

(57) Disclosed are an apparatus and a method for determining a transmit/receive antenna in a Multiple Input Multiple Output (MIMO) communication system. At least one sub-channel matrix including transmit antenna information and receive antenna information is generated. From the at least one sub-channel matrix, a sub-channel matrix having a maximum value Frobenius norm is determined. The transmit and receive antenna information are then extracted from the determined sub-channel matrix.

FIG.1

EP 1 788 721 A2

**Description**

**BACKGROUND OF THE INVENTION**

1. Field of the Invention

The present invention relates generally to a communication system using multiple antennas, and more particularly to an apparatus and a method for determining a transmit/receive antenna in a communication system using multiple antennas.

2. Description of the Related Art

A fundamental issue in communication is the efficiency and reliability with which data is transmitted over a channel. In the extensively researched next generation-multimedia mobile communication system, it is essential to enhance system efficiency by using a channel coding scheme appropriate for the system because the system must meet a demand for a high-speed communication system capable of processing and transmitting far greater amounts of information such as images and radio, than the voice-only services transmitted in previous generation systems.

However, unlike the wire channel environment, the wireless channel environment existing in a mobile communication system is subject to inevitable errors due to several factors such as multipath interference, shadowing, propagation attenuation, time-varying noise, interference and fading, all of which result in a loss of information.

The information loss distorts actual transmission signals, causing deterioration in the overall performance of the mobile communication system. Generally, in order to reduce the information loss, various error control techniques are used to enhance system reliability. A fundamental error control technique uses error correcting codes.

Further, diversity schemes are used for preventing the instability of communication from being caused by the fading, and the diversity schemes are roughly classified into time, frequency and antenna/space diversity schemes.

The antenna diversity scheme, which uses multiple antennas, is in turn classified into a receive antenna diversity scheme using a plurality of receive antennas, a transmit antenna diversity scheme using a plurality of transmit antennas, a Multiple Input Multiple Output (MIMO) scheme using a plurality of receive and transmit antennas, and a Multiple Input Single Output (MISO) scheme using a plurality of receive antennas and a single transmit antenna.

In a communication system using multiple antennas, a transmitter and a receiver are provided with a plurality of antennas, respectively, and transmit/receive the same or other information through their antennas. However, channels are established by the respective antennas in the communication system, and are characteristic of the wireless channel and thus do not exhibit the same performance for all the antennas. Thus, the communication system employs an antenna selection method in which some antennas having good channel conditions are selected from among the antennas of the transmitter or the receiver, and signals are transmitted/received through the selected antennas. By employing the antenna selection method, the transmitter and the receiver obtain diversity gain and a higher Signal-to-Noise Ratio (SNR).

In most antenna selection methods, an antenna having a high channel gain and low correlations with other antennas is selected, and signals are transmitted/received through the selected antenna. The transmit antenna selection method includes two types.

In a first transmit antenna selection method, a transmitter receives complete channel information fed back from a receiver in a communication system. In this manner, since the complete channel information is transmitted/received in the communication system, the receiver transfers optimized channel information to the transmitter during the transmit antenna selection, and thus a transmit antenna is properly selected. However, when a system is implemented such that the complete channel information is transmitted/received as stated above, system complexity and the amount of data transmitted/received between the transmitter and the receiver problematically increases.

In a second transmit antenna selection method, a transmitter receives partial channel information fed back from a receiver in a communication system. When the transmitter and the receiver communicate with each other by using the partial channel information, a Channel Quality Indicator (CQI) or codebook-based partial channel information is transmitted. In the codebook scheme, a number of codebooks are stored in the transmitter and the receiver, and the receiver searches for a codebook corresponding to channel information and feeds back a corresponding codebook index to the transmitter. The transmitter then performs precoding by using the corresponding codebook index. Thus, when using the partial channel information, the system complexity and the amount of data transmitted/received between the transmitter and the receiver decreases as compared with the aforementioned first transmit antenna selection method. However, when the partial channel information is fed back, the overall system performance deteriorates, because imperfect channel knowledge prevent the transmitter from choosing appropriate transmit antennas.

Next, reference will be made to two types of a receive antenna selection method.

In the first receive antenna selection method, a receiver determines a receive antenna in a communication system by using an exhaustive search technique. That is, the total number of cases according to use of receive antennas is ascertained, and a receive antenna having the highest probability value is selected from among the receive antennas. Since the total number of cases is ascertained in the exhaustive search technique, a very high system complexity is incurred.

In the second receive antenna selection method, a receiver uses a decremental technique for reducing system complexity in a communication system. The decremental technique is intended to reduce system complexity as compared with the former type of receive antenna selection method. However, , in proportion to the reduction in system complexity, it becomes difficult to optimize the receive antenna selection.

The joint selection method of transmit and receive antennas also includes two types.

In the first joint selection method, a transmit antenna is selected on a transmit antenna side, and a receive antennas is selected on a receive antennas side. This method enables complexity to be distributed over transmit and receive antennas, but a large amount of feedback information is required for antenna selection, and also joint optimization is difficult.

In the second joint selection method, both a transmit antenna and a receive antenna are selected on a transmit antenna side. This method is problematic in that it also requires a large amount of information to be fed back to a transmitter, and selecting a receive antenna on a transmit antenna side is somewhat useless.

Therefore, in view of the above-mentioned problems occurring when a transmit/receive antenna is determined in a communication system, there is an increasing need to develop an apparatus and a method for determining a transmit/receive antenna, which can decrease the amount of data fed back between a transmitter and a receiver, and optimize transmit/receive antenna selection with reduced system complexity.

## SUMMARY OF THE INVENTION

Accordingly, the present invention has been made to solve at least the above-mentioned problems occurring in the prior art, and an object of the present invention is to provide an apparatus and a method for determining a transmit/receive antenna in a communication system using multiple antennas.

An object of the present invention is to provide an apparatus and a method for determining a transmit/receive antenna in a communication system using multiple antennas, by which the amount of information for antenna selection fed back between a transmitter and a receiver decreases.

An object of the present invention is to provide an apparatus and a method for determining a transmit/receive antenna in a communication system using multiple antennas, by which system complexity is reduced.

An object of the present invention is to provide an apparatus and a method for determining a transmit/receive antenna in a communication system using multiple antennas, by which optimized antenna selection is achieved.

In order to accomplish these objects, in accordance with the present invention, there is provided a method for determining a transmit/receive antenna in a MIMO communication system, the method including generating at least one sub-channel matrix including both transmit and receive antenna information, determining from among the generated sub-channel matrixes a sub-channel matrixhas a maximum value Frobenius norm, and extracting the transmit antenna information and the receive antenna information from the determined sub-channel matrix.

In accordance with the present invention, there is provided an apparatus for determining a transmit/receive antenna in a MIMO communication system, the apparatus including a sub-channel matrix generator for generating at least one sub-channel matrix including transmit antenna information and receive antenna information, a sub-channel matrix determiner for determining from among the generated sub-channel matrixes a sub-channel matrix has a maximum value Frobenius norm, and a transmit/receive antenna information extractor for extracting the transmit antenna information and the receive antenna information from the determined sub-channel matrix.

## BRIEF DESCRIPTION OF THE DRAWINGS

The above and other objects, features and advantages of the present invention will be more apparent from the following detailed description taken in conjunction with the accompanying drawings, in which:

FIG. 1 is a block diagram illustrating a transmitter and a receiver for a communication system using multiple antennas in accordance with the present invention;

FIG. 2 is a block diagram illustrating a receiver structure for determining a receive antenna in a communication system by using receive antenna information in accordance with the present invention;

FIG. 3 is a block diagram illustrating a transmitter structure for determining a transmit antenna in a communication system by receiving transmit antenna information from a receiver in accordance with the present invention;

FIG. 4 is a flowchart illustrating a first embodiment of an operational procedure of determining a receive antenna in a receiver by using receive antenna information in accordance with the present invention;

FIG. 5 is a flowchart illustrating a second embodiment of an operational procedure of determining a receive antenna in a receiver by using receive antenna information in accordance with the present invention; and

FIG. 6 is a flowchart illustrating an operational procedure of determining a transmit antenna in a transmitter by using transmit antenna information received from a receiver in accordance with the present invention.

## DETAILED DESCRIPTION OF THE PREFERRED EMBODIMENTS

Hereinafter, preferred embodiments of the present invention will be described with reference to the accompanying drawings. It should be noted that the similar components are designated by similar reference numerals although they are illustrated in different drawings. Also, in the following description, a detailed description of known functions and configurations incorporated herein will be omitted for the sake of clarity and conciseness.

The present invention provides in a communication system using multiple antennas, in which a receiver determines a receive antenna (Rx ANT), and transmits transmit antenna (Tx ANT) **index and other** information to a transmitter.

Thus, the apparatus and method of the present invention does not require transmission of the total channel information, as in the prior art. To this end, in the present invention, at least one sub-channel matrix including Tx ANT information and Rx ANT information is generated, and a Tx/Rx ANT to be used in signal transmission/reception is determined using a sub-channel matrix has a maximum value Frobenius norm, from among the generated sub-channel matrixes.

It is noted that the present invention will be described below by exemplifying a communication system which employs a Multiple Input Multiple Output (MIMO) scheme using multiple Tx ANTs and Rx ANTs. Hereinafter, such a communication system will be referred to as a "MIMO communication system".

However, the present invention may be applied to all communication systems using multiple antennas, such as a Rx ANT diversity scheme using multiple Rx ANTs, a Tx ANT diversity scheme using multiple Tx ANTs and a MISO scheme.

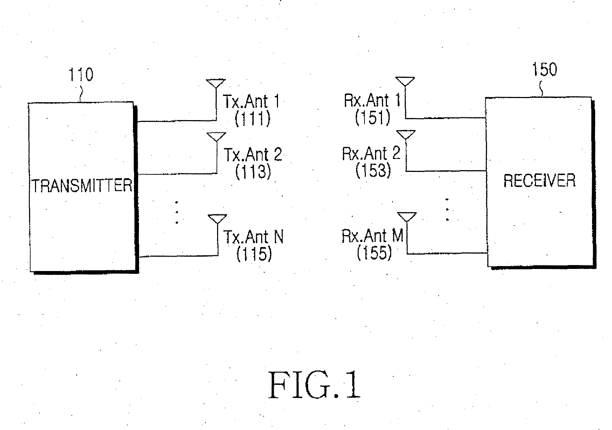

FIG. 1 illustrates a transmitter and a receiver for a communication system using multiple antennas according to the present invention.

Referring to FIG. 1, the transmitter 110 is provided with a plurality (N) of Tx ANTs 111, 113 and 115, and the receiver 150 is provided with a plurality (M) of Rx ANTs 151, 153 and 155. As stated above, the communication system is a MIMO communication system because it uses a plurality of Tx ANTs and a plurality of Rx ANTs.

In this MIMO communication system, the transmitter 110 receives information, based on which a Tx ANT to be used in signal transmission is determined from among the Tx ANTs 111, 113 and 115, from the receiver 150.

Further, the receiver 150 determines a Rx ANT to be used in signal reception from among the Rx ANTs 151, 153 and 155, and receives signals through the determined Rx ANT. The receiver also determines Tx antenna information to be used for Tx antenna determination, that is, information on a Tx ANT to be used in signal transmission of the transmitter 110, and transmits the determined Tx antenna information to the transmitter 110.

The Tx ANT information consists the minimum number of bits, and is transmitted from the receiver 150 to the transmitter 110. In order to determine such a Tx/Rx ANT, the receiver 150 generates a sub-channel matrix from a channel matrix consisting of the Tx ANTs 111, 113 and 115 and the Rx ANTs 151, 153 and 155. Using a value of the Frobenius norm (hereinafter norm), which represents **a squre root of the sum of the absolute squares of a matrix elements**, the generated sub-channel matrix is fashioned into a final sub-channel matrix including Tx ANT information and Rx ANT information.

The present invention proposes two schemes in which the receiver 150 determines a Tx/Rx ANT based on signal strength, for example, Signal to Noise Ratio (SNR), **Signal-to-Interference-plus-Noise Ratio (SINR)** or Carrier-to-Interference-plus-Noise Ratio (CINR).

For example, the present invention proposes two Tx/Rx ANT determination schemes on the basis of a SNR threshold. The first scheme considers when SNR is higher than the SNR threshold (high SNR), and the second scheme considers when SNR is lower than the SNR threshold (low SNR). Since the SNR threshold may have a variable value according to system situations or system settings, it is not limited to a specific value. Here, the operations of the transmitter and the receiver are divided on the basis of the SNR threshold so that channel capacity is taken into consideration.

In an open-loop MIMO communication system, the receiver 150 does not feed back channel information to the transmitter 110, and the channel capacity of the open-loop MIMO communication system is expressed by the following Equation (1):

$$C_{OL} = \log_2 \det(I + \frac{1}{N} H(t)H(t)^* SNR) \qquad \ldots\ldots\ldots\ldots (1)$$

where $I$ denotes a unit matrix having the same dimension as that of $H(t)H(t)^*$, $N$ denotes the number of Tx ANTs, $H(t)$ denotes a channel matrix and $H(t)^*$ denotes a **hermitian matrix of $H(t)$, which represents complex conjugate *of $H(t)$.***

In a closed-loop MIMO communication system, a transmitting-end is aware of channel information in the case of both high SNR and low SNR, and the channel capacity of the closed-loop MIMO system is expressed by the following Equation (2):

$$C_{CL} = \sum_{i=1}^{\min(N,M)} \log_2(1 + \frac{(\lambda_i^2 v - \sigma^2)^+}{\sigma^2}), \qquad \sum_{i=1}^{\min(N,M)} (v - \frac{\sigma^2}{\lambda_i^2})^+ = P \qquad \ldots\ldots\ldots (2)$$

where, $N$ denotes the number of Tx ANTs, $M$ denotes the number of Rx ANTs, $\lambda$ denotes singular values of a channel matrix, which is a diagonal matrix derived from a process in which the channel matrix is subjected to singular value decomposition, $v$ denotes an Eigen vector of the singular value, and $\sigma^2$ denotes a channel noise variance. **The difference of** the channel capacity **between** the closed-loop and **open-loop** MIMO communication system in a high SNR and a low SNR are separately expressed.

A difference between the channel capacity of the closed-loop MIMO communication system having high SNR and the channel capacity of the open-loop MIMO communication system corresponds to $r \log_2(\frac{N}{r})$. . Thus, if a Tx ANT is selected such *that* $r \leq N$ is satisfied, the open-loop MIMO communication system can also have channel capacity approximate to that of the closed-loop MIMO communication system.

A difference between the channel capacity of the closed-loop MIMO communication system having low SNR and the channel capacity of the open-loop MIMO communication system corresponds to $\left(\lambda_1^2 - \frac{\sum_{i=1}^r \lambda_i^2}{N}\right) SNR \cdot \log_2 e$ . Here, $\lambda_1$ is a dominant singular value denoting the maximum of the above-mentioned singular values.

In the present invention, since channel capacity varies according to SNR values in this manner, a sub-channel matrix is determined in consideration of the channel capacity.

In order to determine a sub-channel matrix, the MIMO communication system having high SNR selects a column having full column rank and a norm that is comparatively larger than those of other columns, and columns orthogonal to each other, from the channel matrix. In contrast, the MIMO communication system having low SNR calculates a dominant singular value $\lambda_1^2$, and then determines a Tx ANT by using full column rank in such a manner that a value of $\left(\lambda_1^2 - \frac{\sum_{i=1}^r \lambda_i^2}{N}\right)$ is minimized. The receiver 150 feeds back Tx ANT information with a dominant singular vector corresponding to the dominant singular value, to the transmitter 110.

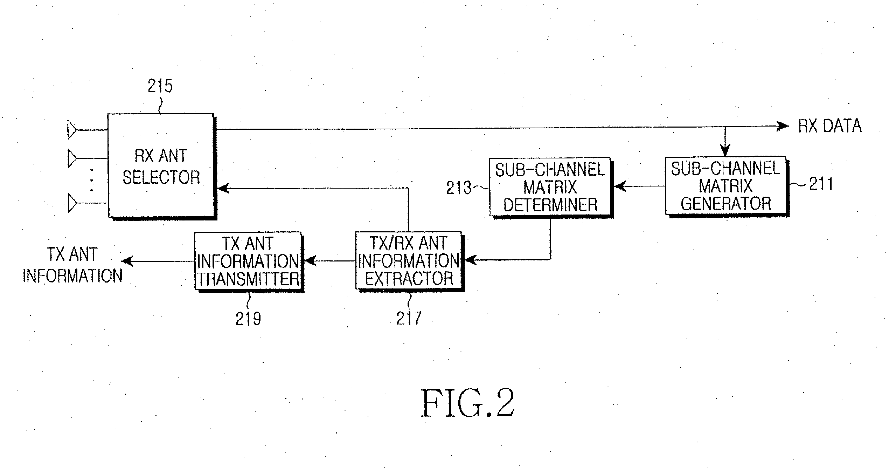

FIG. 2 illustrates a receiver structure for determining a Rx ANT in a communication system by using Rx ANT information according to the present invention.

Referring to FIG. 2, a receiver includes a sub-channel matrix generator 211, a sub-channel matrix determiner 213, a Tx/Rx ANT information extractor 217, a Tx ANT information transmitter 219 and a Rx ANT selector 215.

The receiver may acquire a channel matrix H in cooperation with a transmitter, and the channel matrix H may be calculated using pilot signals, which the receiver receives from the transmitter.

The sub-channel matrix generator 211 determines rows and columns of a sub-channel matrix by using the channel matrix H. Hence, it determines row vectors and column vectors. Here, the row and column vectors consist of elements constituting selected rows and columns, respectively. Thus, the sub-channel matrix generator 211 generates a sub-channel matrix by using the determined rows and columns, and outputs the generated sub-channel matrix to the sub-channel matrix determiner 213.

Rows of a sub-channel matrix are selected using the following Equation (3):

$$P_{r,H}(j) = \left\| H([j],[\cdot]) \right\|_F^2 / \left\| H \right\|_F^2 \qquad \dots\dots\dots (3)$$

which represents a probability density function for selecting rows of a sub-channel matrix, $H$ denotes a channel matrix, $j$ denotes a row index, $H([j],[\cdot])$ denotes a $j$-th row of the channel matrix, and $\| \ \|_F$ denotes the Frobenius norm, that is, norm. The norm of the channel matrix is defined as $\|H\|_F = norm(H \cdot H^H) = \sqrt{\sum_{i,j} \left| h_{ij} \right|^2}$ . Norm is expressed by a positive root of sum of respective matrix elements.

The sub-channel matrix generator 211 selects rows by using the probability density function of Equation (3). After the sub-channel matrix generator 211 selects a number of rows in this manner, it determines columns by using the selected rows.

Columns of a sub-channel matrix for which rows have been determined are selected using Equation (4):

$$P_{c,H}(i) = \left\| H([\cdot],[i]) \right\|_F^2 / \left\| H \right\|_F^2 \qquad \dots\dots\dots\dots (4)$$

which represents a probability density function for selecting columns of a sub-channel matrix, $H$ denotes a channel matrix, $i$ denotes a column index, $H([\cdot],[i])$ denotes a $i$-th column of the channel matrix, and $\| \ \|_F$ denotes the, norm. The norm of the channel matrix is defined as $\|H\|_F = norm(H \cdot H^H) = \sqrt{\sum_{i,j} \left| h_{ij} \right|^2}$ . That is, norm is expressed by a positive root of sum of respective matrix elements, as stated above.

Here, the columns are selected in a manner different from the aforementioned two cases divided on the basis of the SNR threshold.

First, a description will be given for a MIMO communication system having high SNR.

In selecting rows, the sub-channel matrix generator 211 uses probability to select rows having a large norm, as stated above. Once rows are selected, the sub-channel matrix generator 211 selects columns that have a large norm and are orthogonal to each other, by using full column rank. In the present invention, columns are selected using two thresholds, $r_1$ and $r_2$. Threshold $r_1$ is a minimum reference value for the norm of a selected column. That is, the norm of a selected column must have a value above $r_1$. Threshold $r_2$ is an upper reference value for a correlation between a selected column and any other column. That is, if a correlation between a specific column and any other column exceeds $r_2$, this specific column is not selected. Thus, in the present invention, correlations between respective columns are calculated through projections of respective column vectors in order to compare them with $r_2$. Consequently, columns incapable of being represented by combinations of other column elements are selected.

In this manner, the sub-channel matrix generator 211 selects a sub-channel matrix by using the selected rows and columns. The selected sub-channel matrix can be expressed as Equation (5):

$$Q_k = H([j_1, j_2, \cdots, j_l][i_1, i_2, \cdots, i_s]), \ \left| Det_k \right|^2 = \Pi_{q=1}^s \left\| B_q([\cdot],[i_q]) \right\|_F^2 \qquad \dots\dots\dots (5)$$

where, $Q_k$ denotes a selected sub-channel matrix, $i$ and $j$ denote a Tx ANT and a Rx ANT, respectively, $l$ denotes a Rx ANT index and has an integer value of 1 to $M$, $s$ denotes a Tx ANT index and has an integer value of 1 to $N$, $B$ denotes a row, and $k$ denotes the number of trial iterations.

The aforementioned sub-channel matrix operation is iteratively performed the number of times set in the sub-channel matrix generator 211, for example, $k$ times, and the iteratively generated sub-channel matrixes are output to the sub-channel matrix determiner 213. Here, performing the sub-channel matrix operation $k$ times is intended to prevent performance deterioration according to use of the probability density function, or probability values.

If the iteratively selected sub-channel matrixes are input to the sub-channel matrix determiner 213, the sub-channel matrix determiner 213 compares the respective norms of the selected sub-channel matrixes with each other, and selects a sub-channel matrix having a maximum value norm. The norm of a sub-channel matrix is calculated using all elements constituting the sub-channel matrix. The sub-channel matrix determiner 213 determines a sub-channel matrix by using Equation (6):

$$Q = Q_p, \quad p = \arg\max_{1 \le k \le K} \left| Det_k \right|^2 \qquad \dots\dots\dots (6)$$

Once the sub-channel matrix determiner 213 determines a sub-channel matrix $Q$, it outputs the sub-channel matrix $Q$ to the Tx/Rx ANT information extractor 217.

The Tx/Rx ANT information extractor 217 extracts Tx ANT and Rx ANT information from the determined sub-channel matrix $Q$. The Rx ANT information contains corresponding row indexes of the sub-channel matrix $Q$. The receiver can select a Rx ANT to be used in signal reception by using these indexes. The Tx ANT information contains column indexes of the sub-channel matrix $Q$. The transmitter can select a Tx ANT to be used in signal transmission by using these indexes. The Tx ANT information may contain norm values of respective columns of the sub-channel matrix $Q$. In this case, the transmitter can optimize transmission speed by using the norm values for applying a Modulation and Coding Scheme (MCS) according to respective ANTs.

The Tx/Rx ANT information extractor 217 outputs the Rx ANT information to the Rx ANT selector 215, and outputs the Tx ANT information to the Tx ANT information transmitter 219.

The Rx ANT selector 215 selects a Rx ANT to be used in signal reception by using the Rx ANT information extracted from the Tx/Rx ANT information extractor 217, and receives signals through the selected Rx ANT.

The Tx ANT information transmitter 219 transmits the Tx ANT information to a corresponding transmitter.

Second, a description will be given for a MIMO communication system having low SNR.

In selecting rows, the sub-channel matrix generator 211 selects a number of rows by using the probability density function given by Equation (4), instead of using the threshold. The sub-channel matrix generator 211 generates a sub-channel matrix by using the selected rows and columns. The selected sub-channel matrix is expressed by Equation (7):

$$Q_k = H(\left[ j_1, j_2, \cdots, j_l \right]\left[ i_1, i_2, \cdots, i_s \right]) \qquad \dots\dots\dots(7)$$

where $Q_k$ denotes a selected sub-channel matrix, $l$ denotes a Rx ANT index and has an integer value of 1 to $M$, and $s$ denotes a Tx ANT index and has an integer value of 1 to $N$, **and k denotes the number of trial iterations.**

The aforementioned sub-channel matrix operation is iteratively performed the number of times set in the sub-channel matrix generator 211, for example, $k$ times, and the iteratively generated sub-channel matrixes are output to the sub-channel matrix determiner 213. Here, performing the sub-channel matrix operation $k$ times is intended to prevent performance deterioration according to use of the probability density function, or probability values.

If the iteratively selected sub-channel matrixes are input to the sub-channel matrix determiner 213, the sub-channel matrix determiner 213 compares the respective norms of the selected sub-channel matrixes with each other, and selects a sub-channel matrix having a maximum value norm. The norm of a sub-channel matrix is calculated using all elements constituting the sub-channel matrix. The sub-channel matrix determiner 213 determines a sub-channel matrix by using Equation (8):

$$Q = Q_p, \quad p = \arg\max_{1 \le k \le K} \left| Q_k \right|_F^2 \qquad \dots\dots\dots(8)$$

Once the sub-channel matrix determiner 213 determines a sub-channel matrix $Q$, it outputs the sub-channel matrix $Q$ to the Tx/Rx ANT information extractor 217.

A dominant singular value is derived from the sub-channel matrix, and a dominant singular vector connected with the dominant singular value is calculated. This vector, together with Tx ANT information, may be fed back to a transmitter in order to minimize the aforementioned difference between the channel capacity of the closed-loop MIMO communication system having low SNR and the channel capacity of the open-loop MIMO communication system,

$$\left( \lambda_1^2 - \frac{\sum_{i=1}^r \lambda_i^2}{N} \right) SNR \cdot \log_2 e$$ . The norm of the dominant singular vector is compared with those of respective column vectors of the determined sub-channel matrix $Q$. If a difference between the norms of any column and the singular vector is below a threshold, such columns are removed from the sub-channel matrix $Q$, and elements of the singular vector, which correspond to the removed columns, are also removed. In this manner, a final sub-channel matrix is determined using only a large dominant singular value.

The Tx/Rx ANT information extractor 217 extracts Tx ANT and Rx ANT information from the sub-channel matrix $Q$. The Rx ANT information contains corresponding row indices of the sub-channel matrix $Q$. The receiver can select a Rx ANT to be used in signal reception by using these indices. The Tx ANT information contains column indices of the sub-channel matrix $Q$. The transmitter can select a Tx ANT to be used in signal transmission by using these indices. The Tx ANT information may contain the determined final sub-channel matrix $Q$ or may also contain vector values calculated through the sub-channel matrix $Q$.

The Tx/Rx ANT information extractor 217 outputs the Rx ANT information to the Rx ANT selector 215, and outputs the Tx ANT information to the Tx ANT information transmitter 219.

The Rx ANT selector 215 selects a Rx ANT to be used in signal reception by using the Rx ANT information extracted from the Tx/Rx ANT information extractor 217, and receives signals through the selected Rx ANT.

The Tx ANT information transmitter 219 transmits the Tx ANT information to a corresponding transmitter.

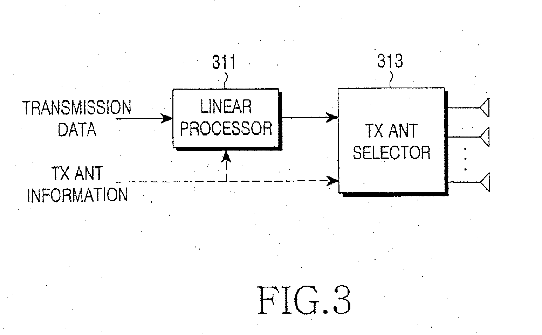

FIG. 3 illustrates a transmitter structure for determining a Tx ANT in a communication system by receiving Tx ANT information from a receiver according to the present invention.

Referring to FIG. 3, a transmitter includes a linear processor 311 and a Tx ANT selector 313, which receive Tx ANT information transmitted from a receiver.

Here, the Tx ANT information may contain Tx ANT indices as well as the norm of a sub-channel matrix and a dominant singular vector value of the sub-channel matrix, according to the aforementioned embodiments.

The linear processor 311 applies the Modulation and Coding Scheme (MCS) to transmission signals in order to optimize transmission speed by using the Tx ANT information. Further, the linear processor 311 may determine a Tx ANT by using the Tx ANT information, and may also select a Tx ANT, through which signals are transmitted, and outputs information on the selected Tx ANT to the Tx ANT selector 313.

When the linear processor 311 selects a Tx ANT, the Tx ANT selector 313 is operative to transmit/receive signals through the selected Tx ANT. However, when the linear processor 311 does not perform the operation for selecting a Tx ANT, the Tx ANT selector may receive the Tx ANT information and select a Tx ANT by using the received Tx ANT information.

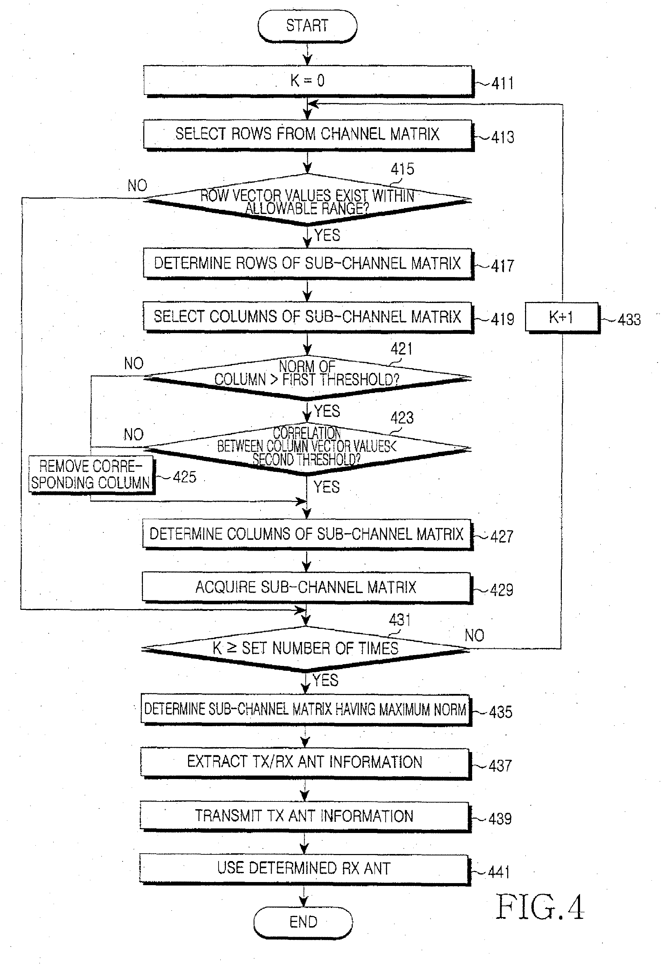

FIG. 4 is a flowchart illustrating a first embodiment of an operational procedure of determining a Rx ANT in a receiver by using Rx ANT information according to the present invention.

Referring to FIG. 4, a receiver sets a value of $K$, for preventing performance deterioration, to 0 in step 411, and proceeds to step 413. Since the receiver uses probability to acquire a sub-channel matrix, performance deterioration may occur. Thus, a sub-channel matrix is iteratively generated the number of times corresponding to a value of $K$.

The receiver selects rows of a sub-channel matrix from a channel matrix, using Equation (5), in step 413, and proceeds to step 415. The receiver determines in step 415 whether a vector value of each selected row is within an allowable range. The allowable range is set such that rows having vector values near to zero (0) are excluded from the selected rows. If the norm of any row vector has a value near 0, then an antenna channel state in the corresponding row vector is poor, and thus the receiver stops calculation for rows having such an antenna channel state. The allowable range may be set as a variable range.

If a result of the judgment in step 415 shows that vector values of all the selected rows are within the allowable range, the receiver proceeds to step 417. Otherwise, the receiver proceeds to step 431.

The receiver determines the selected rows as rows of a sub-channel matrix in step 417, and proceeds to step 419.

The receiver selects columns of a sub-channel matrix in step 419, and proceeds to step 421. Columns of a sub-channel matrix are selected from the respective determined rows.

In step 421, the receiver calculates the norm of each selected column, and determines whether the calculated norm of each selected column exceeds a first threshold. If a result of the determination in step 421 shows that the calculated norm of any selected column is equal to or less than the first threshold, the receiver proceeds to step 425. Otherwise, the receiver proceeds to step 423. Here, the first threshold refers to the aforementioned minimum reference value for the norm of a column.

In step 425, the receiver removes a corresponding column not satisfying the first threshold condition, and proceeds to step 427. That is, in determining a sub-channel matrix, the receiver excludes columns not satisfying the first threshold condition.

The receiver determines in step 423 whether a vector value of each selected column has a correlation below a second threshold. If a result of the check in step 423 shows that a vector value of any selected column is equal to or greater than the second threshold, the receiver proceeds to step 425. Otherwise, the receiver proceeds to step 427. Here, the second threshold refers to an upper reference value for a correlation between a selected column and any other column. That is, if a correlation between a specific column and any other column exceeds the second threshold, this specific column is not selected.

The receiver determines all columns satisfying the second threshold condition as columns of a sub-channel matrix in step 427, and proceeds to step 429.

The receiver acquires a sub-channel matrix by using the determined rows and columns in step 429, and proceeds to step 431.

The receiver judges in step 431 whether a value of K reaches the number of times. If a result of the judgment in step 431 shows that a value of K is below the number of times, the receiver proceeds to step 433. Otherwise, the receiver proceeds to step 435.

The receiver increases a value of $K$ by one in step 433, and proceeds to step 413.

In step 435, the receiver determines a final sub-channel matrix by selecting a sub-channel, having a maximum value norm, from among the iteratively generated sub-channel matrix, and proceeds to step 437.

In step 437, the receiver extracts Tx ANT information and Rx ANT information by using the sub-channel matrix determined in step 437, and proceeds to step 439.

The receiver transmits the extracted Tx ANT information to a transmitter in step 439, and proceeds to step 441.

In step 441, the receiver determines a Rx ANT, to be used in signal reception, by using the Rx ANT information, and receives signals through the determined Rx ANT.

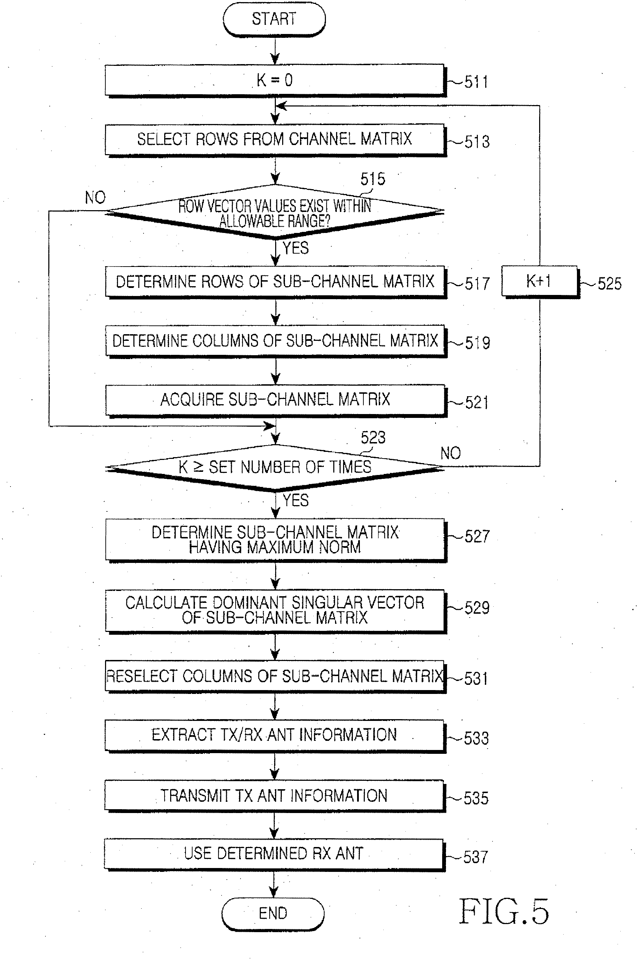

FIG. 5 is a flowchart illustrating a second embodiment of an operational procedure of determining a Rx ANT in a receiver by using Rx ANT information according to the present invention.

Referring to FIG. 5, a receiver sets a value of K, for preventing performance deterioration, to 0 in step 511, and proceeds to step 513. Since the receiver uses probability to acquire a sub-channel matrix, performance deterioration may occur. Thus, a sub-channel matrix is iteratively generated the number of times corresponding to a value of K.

The receiver selects rows of a sub-channel matrix from a channel matrix using Equation (5), in step 513, and proceeds to step 515. The receiver determines in step 515 whether a vector value of each selected row is within an allowable range. The allowable range is set such that rows having vector values near to zero (0) are excluded from the selected rows. If the norm of any row vector has a value near to 0, then an antenna channel state in the corresponding row vector is poor, and thus the receiver stops calculation for rows having such an antenna channel state. The allowable range may be set as a variable range.

If a result of the judgment in step 515 shows that vector values of all the selected rows are within the allowable range, the receiver proceeds to step 517. Otherwise, the receiver proceeds to step 523.

The receiver determines the selected rows as rows of a sub-channel matrix in step 517, and proceeds to step 519.

The receiver determines columns of a sub-channel matrix using Equation (6), in step 519, and proceeds to step 521. The receiver acquires a sub-channel matrix by using the determined rows and columns in step 521, and proceeds to step 523.

The receiver determines in step 523 whether a value of K reaches the number of times. If a result of the determination in step 431 shows that a value of K is below the number of times, the receiver proceeds to step 525. Otherwise, the receiver proceeds to step 527.

The receiver increases a value of K by one in step 525, and proceeds to step 513.

In step 527, the receiver determines a final sub-channel matrix by selecting a sub-channel having a maximum value norm, from among the iteratively generated sub-channel matrix, and proceeds to step 529.

In step 529, the receiver derives a dominant singular value from the determined final sub-channel matrix, calculates a dominant singular vector connected to the derived dominant singular value, and then proceeds to step 533.

The receiver reselects columns of the sub-channel matrix in step 531, and proceeds to step 533. In order to reselect columns, the receiver compares the norm of each column vector with the norm of the dominant singular vector. If a result of the comparison shows that a difference between the norms of any column and the dominant singular vector is below a threshold, such columns are removed from the sub-channel matrix, and elements of the dominant singular vector, which correspond to the removed columns, are also removed. In this manner, the receiver reselects columns of the sub-channel matrix by using only a large dominant singular value.

The receiver extracts Tx ANT information and Rx ANT information by using the sub-channel matrix determined in step 533, and proceeds to step 535.

The receiver transmits the extracted Tx ANT information to a transmitter in step 535, and proceeds to step 537. When the receiver transmits the extracted Tx ANT information, it may also transmit the dominant singular vector.

In step 537, the receiver determines an Rx ANT, to be used in signal reception, by using the Rx ANT information, and receives signals through the determined Rx ANT.

In the present invention, a Tx/Rx ANT determination methods illustrated in FIGs. 4 and 5 may be used either alone or in combination. When these two methods are used in combination, a receiver can alternately use the Tx/Rx ANT determination methods according to a SNR threshold.

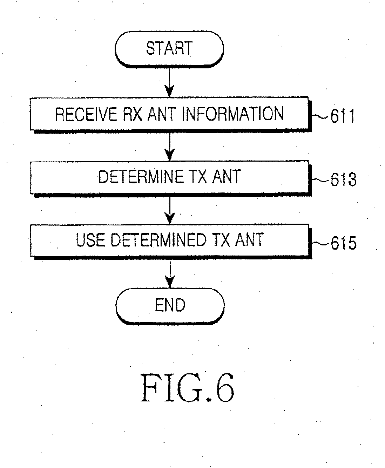

FIG. 6 is a flowchart illustrating an operational procedure of determining a Tx ANT in a transmitter by using Tx ANT information received from a receiver according to the present invention.

Referring to FIG. 6, a transmitter receives Tx ANT information from a receiver in step 611, and proceeds to step 613. For example, the Tx ANT information may include row indexes of a sub-channel matrix determined in the receiver, the norm of the sub-channel matrix, the sub-channel matrix and a vector value of the sub-channel matrix.

In step 613, the transmitter determines a Tx ANT, to be used in signal transmission, by using the Tx ANT information, and proceeds to step 615.

In step 615, the transmitter uses the determined Tx ANT, and may apply an MCS according to ANTs by using the Tx ANT information, so as to optimize transmission speed according to ANTs.

According to the present invention, the total channel information is not fed back to a transmitter in a communication system using multiple antennas. Instead, only minimal antenna information necessary for determining a transmit antenna is transmitted, so that the amount of feedback information is considerably decreased. Further, since the transmit antenna information is transmitted to the transmitter, system complexity can be reduced, and antenna selection for determining a transmit/receive antenna can be optimized. Further, it is possible to consider channel capacity for the antenna selection.

While the invention has been shown and described with reference to a certain preferred embodiment thereof, it will be understood by those skilled in the art that various changes in form and details may be made therein without departing from the spirit and scope of the invention as defined by the appended claims and equivalents thereof.

**Claims**

1.  A method for determining a transmit/receive antenna in a Multiple Input Multiple Output (MIMO) communication system, the method comprising the steps of:

    generating at least one sub-channel matrix including transmit antenna information and receive antenna information;

    determining, from the at least one sub-channel matrix, a sub-channel matrix having a maximum value Frobenius norm; and

    extracting the transmit antenna information and the receive antenna information from the determined sub-channel matrix.

2.  The method as claimed in claim 1, wherein the sub-channel matrix is generated using a channel matrix which includes a plurality of transmit and receive antennas.

3.  The method as claimed in claim 1, wherein generating the at least one sub-channel matrix further comprises:

    selecting rows of the sub-channel matrix from a channel matrix;

    selecting columns of the sub-channel matrix, which include the selected rows; and

    generating the sub-channel matrix by using the selected rows and columns.

4.  The method as claimed in claim 3, wherein the rows of the sub-channel matrix are selected from the channel matrix using a first probability density function expressed by

$$P_{r,H}(j) = \left\| H([j],[\cdot]) \right\|_F^2 / \left\| H \right\|_F^2$$

where $H$ denotes a channel matrix, $j$ denotes a row index, $H([j],[\cdot])$ denotes a $j$-th row of the channel matrix, $\| \ \|_F$ denotes the Frobenius norm, and a Frobenius norm of the channel matrix is defined as $\|H\|_F = norm(H \cdot H^H) =$

$$\sqrt{\sum_{i,j} \left| h_{ij} \right|^2} \ .$$

5.  The method as claimed in claim 3, wherein the columns of the sub-channel matrix are selected using a second probability density function expressed by

$$P_{c,H}(i) = \left\| H\left( [\cdot], [i] \right) \right\|_F^2 / \left\| H \right\|_F^2$$

where $H$ denotes a channel matrix, $i$ denotes a column index, $H([\cdot], [i])$ denotes a $i$-th column of the channel matrix, $\| \ \|_F$ denotes the Frobenius norm, and a Frobenius norm of the channel matrix is defined as $\|H\|F = norm(H \cdot H^H) =$

$$\sqrt{\sum_{i,j} \left| h_{ij} \right|^2} \ .$$

6. The method as claimed in claim 3, wherein the columns are determined such that columns having a larger Frobenius norm are selected using full column rank.

7. The method as claimed in claim 3, wherein the columns are determined such that columns orthogonal to each other are selected.

8. The method as claimed in claim 3, further comprising determining columns of the sub-channel matrix by selecting columns of the channel matrix having norms that exceed a first threshold set as a minimum reference value for the Frobenius norm of a column, and for which correlations between vector values do not exceed a second threshold.

9. The method as claimed in claim 1, further comprising selecting a receive antenna by using indices of elements constituting the rows of the determined sub-channel matrix.

10. The method as claimed in claim 1, further comprising selecting a transmit antenna by using indices of elements constituting the columns of the determined sub-channel matrix.

11. The method as claimed in claim 1, wherein the transmit antenna information includes at least one of a Frobenius norm value of the sub-channel matrix and a vector value calculated through the sub-channel matrix.

12. The method as claimed in claim 1, further comprising transmitting the transmit antenna information to a transmitter using a corresponding transmit antenna.

13. An apparatus for determining a transmit/receive antenna in a MIMO communication system, the apparatus comprising:

a sub-channel matrix generator for generating at least one sub-channel matrix including transmit antenna information and receive antenna information;
a sub-channel matrix determiner for determining, from among the at least one sub-channel matrix, a sub-channel matrix having a maximum value Frobenius norm; and
a transmit/receive antenna information extractor for extracting the transmit and receive antenna information from the determined sub-channel matrix.

14. The apparatus as claimed in claim 13, wherein the sub-channel matrix generator generates the sub-channel matrix by using a channel matrix which includes of a plurality of transmit and receive antennas.

15. The apparatus as claimed in claim 13, wherein the sub-channel matrix generator generates the sub-channel matrix by selecting rows of the sub-channel matrix from a channel matrix, and selecting columns of the sub-channel matrix, which include the selected rows.

16. The apparatus as claimed in claim 15, wherein the rows of the sub-channel matrix are selected using a first probability density function expressed by

$$P_{r,H}(j) = \left\| H([j],[\cdot]) \right\|_F^2 / \left\| H \right\|_F^2$$

where $H$ denotes a channel matrix, $j$ denotes a row index, $H([j],[\cdot])$ denotes a $j$-th row of the channel matrix, $\| \|_F$ denotes the Frobenius norm, and the Frobenius norm of the channel matrix is defined as $\|H\|_F = norm(H \cdot H^H) = $

$$\sqrt{\sum_{i,j} \left| h_{ij} \right|^2} \ .$$

17. The apparatus as claimed in claim 15, wherein the columns of the sub-channel matrix are selected using a second probability density function expressed by

$$P_{c,H}(i) = \left\| H([\cdot],[i]) \right\|_F^2 / \left\| H \right\|_F^2$$

where $H$ denotes a channel matrix, $i$ denotes a column index, $H([\cdot],[i])$ denotes a $i$-th column of the channel matrix, $\| \|_F$ denotes the Frobenius norm, and the Frobenius norm of the channel matrix is defined as $\| H\|_F = norm(H \cdot H^H) = $

$$\sqrt{\sum_{i,j} \left| h_{ij} \right|^2} \ .$$

18. The apparatus as claimed in claim 15, wherein the columns are determined such that columns having a larger Frobenius norm are selected using full column rank.

19. The apparatus as claimed in claim 15, wherein the columns are determined such that columns orthogonal to each other are selected.

20. The apparatus as claimed in claim 15, wherein the columns of the sub-channel matrix are determined by selecting columns having Frobenius norms that exceed a first threshold set as a minimum reference value for the norm of a column, and for which correlations between vector values do not exceed a second threshold.

21. The apparatus claimed in claim 13, further comprising a receive antenna selector for receiving signals through a receive antenna that is selected using indices of elements constituting the rows of the determined sub-channel matrix.

22. The apparatus as claimed in claim 13, further comprising a transmit antenna information transmitter for selecting a transmit antenna by using indexes of elements constituting the columns of the sub-channel matrix, and transmitting information on the selected transit antenna to a corresponding transmitter.

23. The apparatus as claimed in claim 13, wherein the transmit antenna information includes at least one of a Frobenius norm value of the sub-channel matrix and a vector value calculated through the sub-channel matrix.

110

Tx.Ant 1
(111)

Tx.Ant 2
(113)

TRANSMITTER

Tx.Ant N
(115)

Rx.Ant 1
(151)

Rx.Ant 2
(153)

RECEIVER

Rx.Ant M
(155)

150

FIG.1

FIG.2

EP 1 788 721 A2

311

313

TRANSMISSION
DATA →

LINEAR
PROCESSOR

→

TX ANT
SELECTOR

TX ANT
INFORMATION ----→

FIG.3

START

K = 0 ~411

SELECT ROWS FROM CHANNEL MATRIX ~413

415
ROW VECTOR VALUES EXIST WITHIN ALLOWABLE RANGE? — NO

YES

DETERMINE ROWS OF SUB-CHANNEL MATRIX ~417

SELECT COLUMNS OF SUB-CHANNEL MATRIX ~419

K+1 ~433

421
NORM OF COLUMN > FIRST THRESHOLD? — NO

YES
423
CORRELATION BETWEEN COLUMN VECTOR VALUES< SECOND THRESHOLD? — NO

REMOVE CORRE-SPONDING COLUMN ~425

YES

DETERMINE COLUMNS OF SUB-CHANNEL MATRIX ~427

ACQUIRE SUB-CHANNEL MATRIX ~429

431
K ≥ SET NUMBER OF TIMES — NO

YES

DETERMINE SUB-CHANNEL MATRIX HAVING MAXIMUM NORM ~435

EXTRACT TX/RX ANT INFORMATION ~437

TRANSMIT TX ANT INFORMATION ~439

USE DETERMINED RX ANT ~441

END

FIG.4

START

K = 0 ~511

SELECT ROWS FROM CHANNEL MATRIX ~513

515
ROW VECTOR VALUES EXIST WITHIN ALLOWABLE RANGE?
NO
YES

DETERMINE ROWS OF SUB-CHANNEL MATRIX ~517

K+1 ~525

DETERMINE COLUMNS OF SUB-CHANNEL MATRIX ~519

ACQUIRE SUB-CHANNEL MATRIX ~521

523
K ≥ SET NUMBER OF TIMES
NO
YES

DETERMINE SUB-CHANNEL MATRIX HAVING MAXIMUM NORM ~527

CALCULATE DOMINANT SINGULAR VECTOR OF SUB-CHANNEL MATRIX ~529

RESELECT COLUMNS OF SUB-CHANNEL MATRIX ~531

EXTRACT TX/RX ANT INFORMATION ~533

TRANSMIT TX ANT INFORMATION ~535

USE DETERMINED RX ANT ~537

END

FIG.5

START

RECEIVE RX ANT INFORMATION ~611

DETERMINE TX ANT ~613

USE DETERMINED TX ANT ~615

END

FIG.6